# EUROPEAN PATENT SPECIFICATION

(11) **EP 0 443 457 B1**
(45) Date of publication and mention of the grant of the patent: **19.12.2001**
(21) Application number: 91102173.1
(22) Date of filing: 15.02.1991
(51) Int. Cl.: C08L 67/02, C08G 63/66, C08L 55/02, C08G 63/672

(54) **Copolyether ester molding compositions**
Copolyetherester-Formmassen
Compositions à mouler de copolyétheresters

(30) Priority: 23.02.1990 US 483681
(43) Date of publication of application: 28.08.1991
(73) Proprietor: GENERAL ELECTRIC COMPANY, Schenectady New York 12305 (US)
(72) Inventor: Clark II, Richard James, Evansville, Indiana 47714 (US); De Jong, Robertus Eduard, NL-4615 LA Bergen op Zoom (NL)
(74) Representative: Szary, Anne Catherine, Dr.

(56) References cited:
- EP-A- 0 127 981
- EP-A- 0 142 336
- US-A- 3 907 926
- CHEMICAL ABSTRACTS vol. 86, no. 8, 1976, abstract no. 44676e, Columbus, Ohio, US; T. HIDAKA et al.: "Conjugate synthetic fibers" & JP - A - 51116219 (TORAY IND INC) 13.10.1976
- CHEMICAL ABSTRACTS vol. 83, no. 26, 1975, abstract no. 207237s, Columbus, Ohio, US; K. KIGANE et al.: "Microporous structures" & JP - A - 50010364 (TEIJIN CORDLEY LTD.) 03.02.1975

## Description

### Background of the Invention

### 1. Technical Field

The present invention relates to novel thermoplastic elastomeric molding compositions based on a blend of an improved polyether ester resin and a thermoplastic polyester resin. Depending upon their compositional makeup, these compositions have a number of excellent and highly desirable physical properties including excellent tensile elongation and low temperature impact strength as well as other highly desirable stress-strength characteristics including the ability to absorb high energy and "spring back" with little or no permanent deformation upon impact. Molded and extruded products formed from the compositions of the invention exhibit remarkably improved paint adhesion, or "paintability," with both solvent-based and waterborne paints. The compositions find particular utility in the fabrication of automobile components.

### 2. Brief Description of the Prior Art

Copolyether ester compositions possessing a variety of desirable physical properties are known. U.S. Patent Nos. 3,763,109 and 3,766,146 describe thermoplastic copolyester elastomers known generally as HYTREL-brand polymer products of the Du Pont Company. These elastomers are based on two classes of repeating units, namely, long chain ester units which are reaction products of a long chain glycol (typically polytetramethylene glycol) and a dicarboxylic acid (typically a terephthalic acid) and short chain ester units which are reaction products of a low molecular weight glycol (typically 1,4-butanediol) and the dicarboxylic acid. LOMOD-brand copolyether ester compositions of the General Electric Company additionally include a substantial percentage of repeating units formed as reaction products of dimethyl terephthalic acid and 1,6-hexanediol.

An important application of the copolyether ester thermoplastics such as the LOMOD-brand polymer composition described above is in the fabrication of molded, light weight components for automobile interiors and exteriors. The prior art copolyether ester-based molding compositions have many desired properties including good flexibility, heat sag resistance, energy absorbance, impact strength and moldability. While these thermoplastics can be dyed or pigmented, maximum color versatility is obtained by painting the finished, molded products. There has been a need for copolyether ester compositions having improved paintability (i.e., adhesion of both waterborne and solvent-based paints). As seen herein, the present compositions satisfy this need.

The molding compositions of the present invention overcome this difficulty, as the compositions provide a surface having physical and chemical properties especially well suited for the adhesion of these paints.

US-A-3907926 discloses a blend of poly(butylene terephthalate), having a melt index of less than 50 at 250°C and a copolyetherester composition consisting essentially of a multiplicity of recurring long chain units and short chain ester units joined head-to-tail through ester linkages. Preferred copolyetheresters are those prepared from dimethyl terephthalate, 1,4-butanediol and poly(tetramethylene oxide)glycol having a molecular weight of 600-2000 or poly(ethylene oxide) glycol having a molecular weight of 600-1500.

US-A-4579884 discloses thermoplastic elastomeric molding composition which are capable of withstanding high temperatures with little heat sag and which are able to absorb high energy impact and "springback" with little or no permanent deformation consisting of one or more copolyetheresters, in random or block form, and a modifier combination consisting of (a) an aromatic thermoplastic polyester and (b) a mineral filler selected from the group consisting of clay and syenite. The thermoplastic copolyetheresters include both random and block copolymers. In general these are prepared by conventional esterification/polycondensation processes from (a) or more diols, (b) one or more dicarboxylic acids, (c) one or more long chain ether glycols, and, optionally, (d) one or more caprolactones or polycaprolactones. It is an object of the present invention to provide novel thermoplastic molding compositions having excellent elastomeric properties including the ability to absorb and withstand high energy impact and "spring back" to its previous state or shape upon removal of the impinging energy with little or no permanent deformation.

It is also an object of the present invention to provide novel thermoplastic molding compositions having excellent impact strength, particularly low temperature impact strength, while, where desired, retaining good flexibility.

Furthermore, it is an object of the present invention to provide such thermoplastic molding compositions which have superior paintability.

### Summary of the Invention

It has now been discovered that novel thermoplastic molding compositions which overcome the deficiencies of the prior art may be prepared. In one aspect, the present invention provides a thermoplastic molding composition comprising an admixture of
(I) a copolyether ester composition comprising the reaction product of
   (a) at least one low molecular weight aliphatic, cycloaliphatic or aromatic diol;
   (b) at least one dicarboxylic acid;
   (c) at least one poly(alkylene oxide)glycol consisting predominantly of alkylene oxide units having a carbon-to-oxygen ratio of greater than 2.0 and
   (d) polyethylene glycol; and
(II) one or more high molecular weight thermoplastic polyesters. The molding compositions typically further include a modifier resin (III), such as an olefinic rubber or other, per se known, modifier resin component such as an ABS resin, as well as a stabilizer component (IV) and, optionally, a filler (V).

Depending upon the desired physical properties of and the end use application for the resultant composition, these compositions are generically comprised of from about 90 to about 5 parts by weight copolyether ester resin (I), from about 5 to about 90 parts by weight polyester (II), from 0 to about 50 parts by weight modifier resin (III) and from 0 to about 50 parts by weight filler (V). Preferred compositions are those having good flexibility (a characteristic imparted by the copolyether ester resin) combined with good impact strength (a quality imparted by the polyester and modifier resin components). Consequently these preferred compositions will comprise from about 20 to about 80 parts by weight resin (I), from about 80 to about 20 parts by weight polyester (II) and from about 0 to about 25 parts by weight modifier resin (III), in addition to an effective amount of a stabilizer package (IV) and, optionally, a filler (V).

### Detailed Description of the Preferred Embodiments

Molecular weight, or MW, when referred to herein, denotes number average molecular weight. PEG denotes polyethylene glycol, PTMEG denotes polytetramethylene glycol and PBT denotes polybutylene terephthalate.
Reference to dicarboxylic acids encompasses corresponding esters and ester-forming derivatives throughout this application.

Copolyether ester resins (I) suitable for use in the practice of the present invention are characterized as consisting essentially of a multiplicity of recurring intra-linear long chain ester units and short chain ester units connected head-to-tail through ester linkages. The long chain units are defined as the reaction products of a dicarboxylic acid component (b) (which, by definition, includes one or more dicarboxylic acids) and a long-chain poly(alkylene oxide)glycol of component (c) (which again by definition includes one or more poly(alkylene oxide)glycols) and a polyethylene glycol of component (d). The short chain units are the reaction products of a dicarboxylic acid of the dicarboxylic acid component (b) and a diol of component (a).

The amount by which these reactants are employed and thus incorporated into the resins of the present compositions is dependent to a large extent on the properties desired in the resultant copolyester. In general, the amount of reactants (a), (c) and (d) used will be such that the weight ratio of long chain units to short chain units in the resulting resin would be from about 99:1 to 1:99, preferably from about 80:20 to 20:80 and most preferably from about 30:70 to 65:35. The compositions may contain and preferably do contain stabilizers for greater stabilization and/or low temperature impact strength.

Suitable diols (a) for use in preparing the resins, and which react to form the short chain units, include saturated and unsaturated aliphatic and cycloaliphatic dihydroxy compounds as well as aromatic dihydroxy compounds. These diols are preferably of a low molecular weight, i.e. having a molecular weight of about 300 or less. When used herein, the term "diols" and "low molecular weight diols" should be construed to include equivalent ester forming derivatives thereof, provided, however, that the molecular weight requirement pertains to the diol only and not to its derivatives. Exemplary of ester forming derivatives there may be given the acetates of the diols as well as for example ethylene oxide or ethylene carbonate for ethylene glycol.

Preferred saturated and unsaturated aliphatic and cycloaliphatic diols are those having from about 2 to 19 carbon atoms. Exemplary of these diols there may be given ethylene glycol; propanediol; butanediol; pentanediol; 2-methyl propanediol; 2,2-dimethyl propanediol; hexanediol; decanediol; 2-octyl undecanediol; 1,2-, 1,3- and 1,4- dihydroxy cyclohexane; 1,2-, 1,3- and 1,4-cyclohexane dimethanol; butenediol; hexenediol, etc. Especially preferred are 1,4-butanediol and mixtures thereof with hexanediol or butanediol, most preferably 1,4-butanediol.

Aromatic diols suitable for use in the preparation of the copolyether ester resins are generally those having from 6 to about 19 carbon atoms. Included among the aromatic dihydroxy compounds are resorcinol; hydroquinone; 1,5-dihydroxy naphthalene; 4,4'-dihydroxy diphenyl; bis(p-hydroxy phenyl)methane and 2,2-bis(p-hydroxy phenyl) propane.

Especially preferred diols are the saturated aliphatic diols, mixtures thereof and mixtures of saturated diol(s) with unsaturated diol(s), wherein each diol contains from 2 to about 8 carbon atoms. Where more than one diol is employed, it is preferred that at least about 60 mole %, based on the total diol content be the same diol, most preferably at least 80 mole %. The preferred compositions are those in which 1,4-butanediol is present in a predominant amount, and in which the diol component consists virtually entirely of 1,4-butanediol and 1,6-hexanediol.

Dicarboxylic acids (b) which are suitable for use in the preparation of the resins are aliphatic, cycloaliphatic, and/or aromatic dicarboxylic acids. These acids are preferably of a low molecular weight, i.e., having a molecular weight of less than about 300; however, higher molecular weight dicarboxylic acids, especially dimer acids, may also be used. The term "dicarboxylic acids" as used herein, includes equivalents of dicarboxylic acids having two functional carboxyl groups which perform substantially like dicarboxylic acids in reaction with glycols and diols in forming polyester polymers. These equivalents include esters and ester-forming derivatives, such as acid halides and anhydrides. The molecular weight preference, mentioned above, pertains to the acid and not to its equivalent ester or ester-forming derivative. Thus, an ester of a dicarboxylic acid having a molecular weight greater than 300 or an acid equivalent of a dicarboxylic acid having a molecular weight greater than 300 are included provided the acid has a molecular weight below about 300.
Additionally, the dicarboxylic acids may contain any substituent group(s) or combinations which do not substantially interfere with the polymer formation and use of the polymer of this invention.

Aliphatic dicarboxylic acids, as the term is used herein, refers to carboxylic acids having two carboxyl groups each of which is attached to a saturated carbon atom. If the carbon atom to which the carboxyl group is attached is saturated and is in a ring, the acid is cycloaliphatic.

Aromatic dicarboxylic acids, as the term is used herein, are dicarboxylic acids having two carboxyl groups each of which is attached to a carbon atom in an isolated or fused benzene ring system. It is not necessary that both functional carboxyl groups be attached to the same aromatic ring and where more than one ring is present, they can be joined by aliphatic or aromatic divalent radicals or divalent radicals such as -O- or -SO₂-.

Representative aliphatic and cycloaliphatic acids which can be used for the preparation of the copolyether ester resins are sebacic acid, 1,2-cyclohexane dicarboxylic acid; 1,3-cyclohexane dicarboxylic acid; 1,4-cyclohexane dicarboxylic acid; adipic acid; glutaric acid; succinic acid; oxalic acid; azelaic acid; diethylmalonic acid; allylmalonic acid; dimer acid; 4-cyclohexene-1,2-dicarboxylic acid; 2-ethylsuberic acid; tetramethylsuccinic acid; cyclopentanedicarboxylic acid; decahydro-1,5-naphthalene dicarboxylic acid; 4,4'-bicyclohexyl dicarboxylic acid; decahydro-2,6-naphthalene dicarboxylic acid; 4,4 methylenebis(cyclohexane carboxylic acid); 3,4-furan dicarboxylic acid; and 1,1-cyclobutane dicarboxylic acid. Preferred aliphatic acids are cyclohexane dicarboxylic acids, sebacic acid, dimer acid, glutaric acid, azelaic acid and adipic acid.

Representative aromatic dicarboxylic acids which can be used include terephthalic, phthalic and isophthalic acids, bi-benzoic acid, substituted dicarboxy compounds with two benzene nuclei such as bis(p-carboxyphenyl) methane, oxybis(benzoic acid), ethylene-1,2-bis-(p-oxybenzoic acid), 1,5-naphthalene dicarboxylic acid, 2,6-naphthalene dicarboxylic acid, 2,7-naphthalene dicarboxylic acid, phenanthrene dicarboxylic acid, anthracene dicarboxylic acid, 4,4'-sulfonyl dibenzoic acid, and halo and C₁-C₁₂ alkyl, alkoxy, and aryl ring substitution derivatives thereof. Hydroxy acids such as p(β-hydroxyethoxy)benzoic acid can also be used provided an aromatic dicarboxylic acid is also present.

Preferred dicarboxylic acids for the preparation of the copolyether esters of the present invention are the aromatic dicarboxylic acids, mixtures thereof and mixtures of one or more dicarboxylic acid with an aliphatic and/or cycloaliphatic dicarboxylic acid, most preferably the aromatic dicarboxylic acids. Among the aromatic acids, those with 8-16 carbon atoms are preferred, particularly the benzene dicarboxylic acids, i.e., phthalic, terephthalic and isophthalic acids and their dimethyl derivatives. Especially preferred is dimethyl terephthalate.

Finally, where mixtures of dicarboxylic acids are employed in the preparation of the resins, it is preferred that at least about 60 mole %, preferably at least about 80 mole %, based on 100 mole % of dicarboxylic acid (b) be of the same dicarboxylic acid or ester derivative thereof. As mentioned above, the preferred compositions are those in which dimethylterephthalate is the predominant dicarboxylic acid. Most preferably, dimethylterephthalate is the only dicarboxylic acid employed in the preparation of the polyether esters.

The poly(alkylene oxide)glycols of component (c) suitable for use are polymeric glycols having terminal (or as nearly terminal as possible) hydroxy groups and a molecular weight of from about 600 to about 12000. Additionally, the long chain ether glycols will generally have a carbon to oxygen ratio of from about greater than 2.0 to about 4.3. The long chain glycols consist predominantly, and preferably entirely, of alkylene oxide units having a carbon to oxygen ratio of greater than 2.0. Thus, polyethylene glycol (i.e. poly(ethylene oxide)glycol) is excluded from the definition of component (c).

Representative long chain ether glycols are the poly(alkylene ether) glycols including poly(propylene ether)glycol; polytetramethylene ether glycol; random or block copolymers of ethylene oxide and propylene oxide (providing the propylene oxide units predominate), including propylene oxide and poly(propylene oxide) terminated poly(alkylene ether) glycol; and random or block copolymers of tetrahydrofuran with minor amounts of a second monomer such as ethylene oxide, propylene oxide, and methyl tetrahydrofuran (used in proportion such that the carbon-to-oxygen mole ratio in the glycol does not exceed about 4.3). Polyformal glycols prepared by reacting formaldehyde with diols such as 1,4-butanediol and 1,5-pentanediol are also useful. Especially preferred poly(alkylene ether)glycols are poly(propylene ether)glycol, and poly(tetramethylene ether)glycol and poly(propylene glycol) capped with poly(1,2 ethylene ether)glycol. Where the poly(alkylene oxide) glycol contains more than one type of alkylene oxide repeating unit, alkylene oxide units having greater than 2 carbon atoms predominate, i.e. are present in excess of 50 mol % and preferably in excess of 70 mol %.

In addition to the poly(alkylene oxide) glycol component (c) described above, the polyether ester resins also contain long chain units derived from dicarboxylic acid and polyethylene glycol. These units are derived from polyethylene glycol of molecular weight between about 200 and 4,000 preferably 400 and 2,000, more preferably between about 1,000 and 2,000, inclusive.

The amount by which each of the foregoing reactants is employed in the preparation of the copolyether ester resins of the present invention is not, in general, critical and depends, in part, upon the desired properties of the resultant polymer. Obviously, sufficient amounts of diol versus diacid must be present, as recognized in the art, to allow for substantially complete polymerization.

In general, the amount of diol (a) employed in the practice of the present invention will be a molar excess, preferably about 1.5 molar equivalents, based on the molar equivalents of dicarboxylic acid (b).

The resins can contain from 1 to 99 percent by weight of the short chain units, the remainder being long chain units. Preferably, the resins contain from 20 to 80 percent by weight of the short chain units, optimally from 35 to 70 percent.

While the amount of diol will directly affect the degree of polymerization achieved in the polymerization process, the weight ratio of the long chain units to the short chain units will have the greater impact on the properties of the final polymer. The actual weight ratio employed will be dependent upon the specific poly(alkylene oxide)glycol used and, more importantly, the desired physical and chemical properties of the resultant copolyether ester. In general, the lower the ratio of long chain units to short chain units the better the strength, crystallization and heat distortion properties of the polymer. Alternatively, the higher the ratio, the better the flexibility, tensile set and low temperature impact characteristics. Indeed, the copolyether esters of the present invention can be regarded as segmented polymers consisting of "hard block" short chain units and "soft block" long chain units.

In preferred embodiments, the copolyether ester resins employed in the compositions of the present invention will comprise the reaction product of dimethylterephthalate, optionally with up to 40 mole % of another dicarboxylic acid; 1,4-butanediol or a mixture of the same with 1,6-hexanediol, optionally with up to 40 mole % of another saturated or unsaturated aliphatic and/or cycloaliphatic diol; a poly(alkylene oxide) glycol of molecular weight of from about 600 to about 12000, preferably from about 900 to about 4000, and polyethylene glycol of molecular weight of from about 400 to 2,000. In its most preferred embodiments, the low molecular weight diol component (b) will be a mixture of about 70 mole % 1,4-butanediol and 30 mole % 1,6-hexanediol, and the dicarboxylic acid component (b) will consist entirely of dimethylterephthalate.

The copolyether esters described herein may be prepared by conventional esterification/condensation reactions for the production of polyesters. Exemplary of the processes that may be practiced are as set forth in, for example, U.S. Pat. Nos. 3,023,192; 3,763,109; 3,651,014; 3,663,653 and 3,801,547, herein incorporated by reference. Typically, the reactants will be charged into the reactor vessel and heated to 150° to 260° C. Heating is continued until methanol and/or water evolution is substantially complete. Depending upon the temperature, catalyst and diol excess, this polymerization is complete within a few minutes to a few hours. The low molecular weight prepolymer as produced may subsequently be carried to a high molecular weight polymer by polycondensation. The polycondensation step entails elevating the temperature to between about 240° C to 300° C and decreasing the pressure in the reaction vessel to less than about 670 Pa, preferably less than about 250 Pa. During polycondensation excess diol is distilled off and additional ester interchange occurs to build the polymer.

It will be apparent to the artisan that it is possible to vary the reaction conditions and the like. Additionally, it is possible to vary the process itself. For example, the aromatic dicarboxylic acid (b) and diol components (a), (c) and/or (d) can be pre-reacted.
Forming the pre-polyester of (a) with (b), (c) and/or (d) can be achieved by conventional esterification process.

Additionally, while not required, it is customary and preferred to utilize a catalyst or catalyst system in the process for the production of the copolyether esters of the present invention. In general, any of the known ester-interchange and polycondensation catalysts may be used. Although two separate catalysts or catalyst systems may be used, one for ester interchange and one for polycondensation, it is preferred, where appropriate, to use one catalyst or catalyst system for both. In those instances where two separate catalysts are used, it is preferred and advantageous to render the ester-interchange catalyst ineffective following the completion of the precondensation reaction by means of known catalyst inhibitors or quenchers, in particular, phosphorus compounds such as phosphoric acid, phosphenic acid, phosphonic acid and the alkyl or aryl esters or salts thereof, in order to increase the thermal stability of the resultant polymer.

Exemplary of the suitable known catalysts are the acetates, carboxylates, hydroxides, oxides, alcoholates or organic complex compounds of zinc, manganese, antimony, cobalt, lead, calcium and the alkali metals insofar as these compounds are soluble in the reaction mixture. Specific examples include, zinc acetate, calcium acetate and combinations thereof with antimony tri-oxide and the like. These catalysts as well as additional useful catalysts are described in the literature.

Where the reactants and reactions allow, it is preferred to use the titanium catalysts including the inorganic and organic titanium containing catalysts, such as those described in the literature. Especially preferred are the organic titanates such as tetra-butyl titanate, tetra-isopropyl titanate and tetra-octyl titanate and the complex titanates derived from alkali or alkaline earth metal alkoxides and titanate esters, most preferably the organic titanates. These too may be used alone or in combination with other catalysts such as for example, zinc acetate, calcium acetate, manganese acetate or antimony trioxide, and/or with a catalyst quencher as described above. The catalyst should be used in amounts of from about 0.005 to about 2.0 percent by weight based on the total reactants.

Both batch and continuous methods can be used for any stage of the polymer preparation. Polycondensation of the pre-reaction products of the diacid with one or more of the di-hydroxy components (a), (c) and (d) can also be accomplished in the solid phase by heating finely ground product in a vacuum or in a stream of inert gas to remove liberated low molecular weight diol. This method has the advantage of reducing degradation because it must be used at temperatures below the softening point of the pre-reaction products. The major disadvantage is the long time required to reach a given degree of polymerization.

Although the copolyether esters possess good resistance toward heat aging and photodegradation, it is advisable to stabilize these compositions by incorporating antioxidants therein.

Most any oxidative and/or thermal stabilizer known in the art for use with copolyesters may be used in the practice of the present invention. These can be incorporated into the compositions either during polymerization or while in a hot melt stage following polymerization. Satisfactory stabilizers include the phenols and their derivatives, amines and their derivatives, compounds containing both hydroxyl and amine groups, hydroxyazines, oximes, polymeric phenolic esters and salts of multivalent metals in which the metal is in its lower valence state.

Representative phenol derivatives useful as stabilizers include 3,5-di-tert-butyl-4-hydroxy hydrocinnamic triester with 1,3,5-tris-(2-hydroxyethyl)-s-triazine-2,4,6-(lH,3H,5H)trione N,N'-hexamethylene-bis(3,5-di-tert-butyl-4-hydroxyhydrocinnamamide); 4,4'-bis(2,6-ditertiary-butylphenol); 1,3,5-trimethyl-2,4,6-tris(3,5-ditertiary-butyl-4-hydroxybenzyl)benzene and 4,4'-butylidene-bis(6-tertiary-butyl-m-cresol). Various inorganic metal salts or hydroxides can be used as well as organic complexes such as nickel dibutyl dithiocarbonate, manganous salicylate and copper 3-phenyl-salicylate. Typical amine stabilizers include 4,4-bis(α,α-dimethylbenzyl) diphenylamine, N,N'-bis(β-naphthyl)-p-phenylene diamine; N,N'-bis(1-methylheptyl)-p-phenylene diamine and either phenyl-β-naphthyl amine or its reaction products with aldehydes. Mixtures of hindered phenols with esters of thiodipropionic acid, mercaptides, epoxies and/or phosphite esters (all known classes of stabilizers) are particularly useful. Additional stabilization to ultraviolet light can be obtained by compounding with various UV absorbers such as substituted benzophenones and/or benzotriazoles.

Further, the properties of these copolyether esters can be modified by incorporation of various conventional inorganic fillers such as carbon black, silica gel, alumina, clays and chopped fiberglass. These may be incorporated in amounts up to 50% by weight, preferably up to about 30% by weight. In general, these additives have the effect of increasing the modulus of the material at various elongations.

The second component (II) of the compositions of the instant invention are high molecular weight thermoplastic polyesters derived from one or more diols and one or more dicarboxylic acids. Suitable diols and dicarboxylic acids useful in the preparation of the polyester component include those diols (a) and dicarboxylic acids (b) mentioned above for use in the preparation of the copolyether esters. Preferred polyesters are the aromatic polyesters derived from one or more aliphatic and/or cycloaliphatic diols and an aromatic dicarboxylic acid. Aromatic dicarboxylic acids from which the aromatic polyesters may be derived include, for example, the phthalic, isophthalic and terephthalic acids, naphthalene 2,6-dicarboxylic acid and the ester derivatives thereof, as well as other aromatic dicarboxylic acids mentioned above. Additionally, these polyesters may also contain minor amounts of other units such as aliphatic dicarboxylic acids and aliphatic polyols and/or polyacids. Preferred polyesters are the aromatic polyesters having repeating units of the general formula 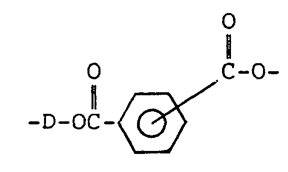 wherein D is derived from one of the low molecular diols (a) described above. Most preferably D is derived from a C₂ to C₆ aliphatic diol. Exemplary of the preferred aromatic polyesters are poly(butylene terephthalate), poly(butylene terephthalate-co-isophthalate), poly(ethylene terephthalate) and blends thereof. Poly(butylene terepthalate) is most preferred. These polyesters are either commercially available or can be produced by methods well known in the art. Illustratively, the high molecular weight thermoplastic polyesters (II) will have an intrinsic viscosity of at least about 0.4 deciliters/gram and, preferably, at least about 0.7 deciliters/gram as measured in a 60:40 phenol/ tetrachloroethane mixture at 30° C.

The modifier resin or resin combination (III) component of the composition are per se known materials which can be characterized as homopolymer or copolymer modifier resins having as a major constituent units derived from one or more monomers selected from the group consisting of vinyl aromatics, esters of acrylic and alkylacrylic acids and conjugated dienes. Typically, the preferred modifier resins will comprise a predominate amount of monomer or monomers selected from the foregoing group. Additionally, the preferred modifier resins will be of a rubbery nature. Also, many of the preferred modifier resins are derived from two or more of these monomeric units. A wide variety of suitable modifier resins are described in detail in U.S. Patent No. 4,659,765. Also suitable as modifiers are the olefinic rubbers including polybutadiene, ethylene propylene, ethylene propylenediene and styrenebutadiene rubbers, for example.

The first class of modifier resins are those derived from the vinyl aromatic monomers. These include both homopolymers and copolymers, including random, block, radial block, and core-shell copolymers. Specifically, suitable vinyl aromatic modifier resins include modified and unmodified polystyrenes, ABS-type graft copolymers; AB and ABA type block and radial block copolymers and vinyl aromatic conjugated diene core-shell graft copolymers.

Modified polystyrenes include the rubber-modified polystyrenes such as butadiene rubber modified polystyrene otherwise referred to as high impact polystyrene or HIPS. Additional useful modified polystyrenes include copolymers of styrene and various monomers, including, for example, α-substituted and p-substituted styrenes, maleic anhydride and imide- and ester-derivatives of maleic anhydride.

ABS-type graft copolymers and processes for their production are well known and widely available commercially. Typically, these copolymers are prepared by polymerizing a conjugated diene alone or in combination with a monomer copolymerizable therewith to form a rubbery polymeric backbone. After formation of the backbone, at least one grafting monomer and preferably two are polymerized in the presence of the prepolymerized backbone to obtain the graft copolymer. Suitable conjugated dienes may be substituted or non-substituted and include, but are not limited to, butadiene, isoprene, 1,3-heptadiene, methyl-1,3-pentadiene, 2,3-dimethyl-1,3-butadiene, 2-ethyl-1,3-pentadiene, 1,3- and 2,4-hexadienes, dichlorobutadiene, bromobutadiene, dibromobutadiene, and mixtures thereof. Monomers copolymerizable therewith to form the rubber backbone include the monoalkenyl arene monomers, the acrylonitriles and the acrylic acid esters, as hereinafter defined. Preferred rubbery backbone polymers are derived from butadiene, alone or in combination with styrene or acrylonitrile, most preferably polybutadiene.

An additional class of vinyl aromatic resin modifiers useful herein are the block copolymers comprising monoalkenyl arene blocks and hydrogenated, partially hydrogenated and non-hydrogenated conjugated diene blocks and represented as AB and ABA block copolymers. Suitable monoalkenyl arene and conjugated diene monomers for use in the preparation of the block copolymers include those mentioned above for the preparation of the ABS type graft copolymers. The term "monoalkenyl arene" includes styrene and its analogs and homologs including alpha-methylstyrene and ring-substituted styrenes, particularly ring-methylated styrenes. The preferred monoalkenyl arenes are styrene and alpha-methylstyrene, most preferably styrene. The B blocks may comprise homopolymers of butadiene or isoprene and copolymers of one of these two dienes with a monoalkenyl arene as long as the B blocks predominate in conjugated diene units. Both AB di-block and ABA triblock polymers are commercially available.

Another class of modifier resins are those derived from the esters of acrylic or alkyl acrylic acid.
Examples include the homopolymers and copolymers of alkyl acrylates and alkyl methacrylates in which the alkyl group contains from 1 to 8 carbon atoms including, for example, methyl acrylate, ethyl acrylate, butyl acrylate, methyl methacrylate, ethyl methacrylate and butyl methacrylate. Suitable copolymers include the copolymers of the foregoing with vinyl or allyl monomers (e.g. acrylonitrile, N-allymaleimide or N-vinyl maleimide) or with alpha-olefins (e.g. ethylene). Especially preferred alkyl acrylate resins are the homopolymers and copolymers of methyl methacrylate (e.g. polymethyl methacrylate).

Other useful modifier resins are those based on conjugated dienes. While many copolymers containing conjugated dienes have been discussed above, additional conjugated diene modifier resins include for example homopolymers and copolymers of one or more conjugated diene including, for example, polybutadiene rubber or polyisoprene rubber. The ethylene-propylene-diene monomer (EPDM) rubbers are also intended to be within the scope of the present invention.

Finally, one group of modifier resins which transcends all of the above classes are the core-shell type graft copolymers. In general these are characterized as having a predominately conjugated diene rubbery core or a predominately crosslinked acrylate rubbery core and one or more shells polymerized thereon and derived from monoalkenyl arene and/or acrylic monomers alone or, preferably, in combination with other vinyl monomers. These core-shell polymers also are per se known and described in the literature.

In a preferred embodiment where a core-shell copolymer is employed as the modifier resin, it is desirable to precompound the core-shell copolymer with the poly(butylene terephthalate) or a portion thereof. As identified by Yusa et al. in U.S. Patent No. 4,442,262, the use of core-shell copolymers in general with copolyether esters results in the occurrence of surface roughness and fisheyes. Otherwise unsuitable core-shell copolymers may be employed without the occurrence of fisheye if the core-shell copolymer is pre-compounded with the poly(butylene terephthalate). The use of the pre-compounded core-shell copolymer results in composition having improved physical properties as compared to those compositions wherein the poly(butylene terephthalate) and core-shell copolymers were not precompounded.

While the foregoing is concerned with precompounding of the core-shell copolymer, the concept of precompounding is equally applicable to any of the modifier resins (III).

Optionally, the composition of the present invention may further comprise a filler to provide improved dimensional stability. Suitable inorganic fillers are well known and widely available commercially.
Crystalline and paracrystalline clays are one class of suitable fillers. Clay or other inorganic fillers which have been treated with a titanate or silane coupling agent are useful. Exemplary of such coupling agents are vinyl tris 2-methoxy ethoxy silane and gamma-aminopropyl triethyoxy silane (A-1100, Union Carbide).

The formulation of the composition of the present invention may vary widely depending upon the desired physical properties of, and the anticipated end-use application for, the final composition. Generally any combination of components (I) through (III) may be employed; where the inorganic filler component (V) is employed it should comprise no more than 50% and preferably no more than about 30% by weight of the total composition. Stabilizers, component (IV), are employed in conventional, effective amounts.

Typically, the compositions of the present invention will comprise, in parts by weight, from about 90 to about 5 parts by weight copolyether ester resin (I), from about 5 to about 90 parts by weight thermoplastic polyester (II), from about 0 to about 50 parts by weight modifier resin (III) and from 0 to about 30 parts by weight filler (V). Preferred compositions are those having good flexibility (a characteristic imparted by the copolyether ester resin) combined with good impact strength (a quality imparted by the polyester and modifier resin components). Consequently these preferred compositions will comprise from about 80 to about 20 parts by weight resin (I), from about 20 to about 80 parts by weight polyester (II) and from about 0 to about 25 parts by weight modifier resin (III), in addition to an effective amount of a stabilizer package (IV). While compositions of greater than about 60 parts by weight of the polyester component (II) are especially suited for applications requiring very stiff or rigid materials, an especially preferred class of compositions are those which have the excellent stress-strength characteristics of the more rigid compositions yet retain excellent flexibility. Such compositions will generally comprise, in parts by weight, from about 30 to about 70 parts component (I); from about 20 to about 60 parts component (II); from about 5 to about 15 parts component (III); and, optionally up to about 25, preferably up to about 15, parts component (V) filler.

While the compositions of this invention possess many desirable properties, it is preferred to further stabilize certain of them against thermal or oxidative degradation as well as degradation due to ultraviolet light. This can be done by incorporating stabilizers (in effective amounts to be determined by the artisan) into the blend compositions. Satisfactory stabilizers comprise phenols and their derivatives, amines and their derivatives, compounds containing both hydroxyl and amine groups, hydroxyazines, oximes, polymeric phenolic esters and salts of multivalent metals in which the metal is in its lower state.

Representative phenol derivatives useful as stabilizers include 3,5-di-tert-butyl-4-hydroxy hydrocinnamic triester with 1,3,5-tris-(2-hydroxyethyl-s-triazine-2,4,6-(1H, 3H, 5H) trione; 4,4'-bis(2,6-ditertiary-butylphenyl); 1,3,5-trimethyl-2,4,6-tris(3,5-ditertiary-butyl-4-hydroxylbenzyl)benzene and 4,4'-butylidene-bis(6-tertiary-butyl-m-cresol). Various inorganic metal salts or hydroxides can be used as well as organic complexes such as nickel dibutyl dithiocarbamate, manganous salicylate and copper 3-phenyl-salicylate. Typically, amine stabilizers include N,N'-bis(beta-naphthyl)-p-phenylenediamine; N,N'-bis(1-methylheptyl)-p-phenylenediamine and either phenyl-beta-naphthyl amine or its reaction products with aldehydes. Mixtures of hindered phenols with esters of thiodipropionic acid, mercaptides and phosphite esters are particularly useful. Additional stabilization to ultraviolet light can be obtained by compounding with various UV absorbers such as substituted benzophenones and/or benzotriazoles.

A preferred stabilizer package for use in the blends of the present invention includes a hindered phenol primary antioxidant and a secondary antioxidant comprising a mixture of phosphite, thioester and epoxy stabilizers.

The compositions of the present invention may be prepared by any of the well known techniques for preparing polymer blends or admixtures, with extrusion blending being preferred. Suitable devices for the blending include single screw extruders, twin screw extruders, internal mixers such as the Bambury Mixer, heated rubber mills (electric or oil heat) or Farrell continuous mixers. Injection molding equipment can also be used to accomplish blending just prior to molding, but care must be taken to provide sufficient time and agitation to insure uniform blending prior to molding.

Alternatively, the compositions of the present invention may be prepared by dry blending the components prior to extrusion or injection molding. Finally, as mentioned, any two or more of the components, preferably at least (II) and (III), may be pre-compounded prior to compounding with the copolyether ester. It is also possible to pre-compound the resin (I) with the modifier (III) prior to addition of the polyester (II).

The polymer compositions prepared in accordance with the present invention are suitable for a broad range of applications. These compositions manifest excellent physical attributes making them especially suited for applications requiring excellent stress-strength characteristics and low temperature impact strength yet maintaining good flexibility.

The following examples are given as exemplary of the present invention and are not to be construed as limiting thereto.

### Examples

The following ASTM methods were used in determining the physical characteristics of the compositions:
Flexural Modulus and Strength: ASTM D790
Tensile Elongation and Strength: ASTM D638
Notched and Unnotched Izod: ASTM D256

The adhesion of a waterborne urethane paint on four inch discs of the exemplified blends was tested by two methods. The paint was applied and baked at 80° C for thirty minutes. In the cross-hatch or "X-hatch" qualitative method, an "X" is made through the paint and into the substrate, tape is applied across the "X" and then removed. The substrate is examined for paint loss (i.e. failure). In a "T-test" quantitative paint test method, a polymeric strip is attached to the painted surface by an adhesive. The force needed to remove the paint is measured by a load cell and recorded. The paint adhesion was measured 24 hours after application of the paint. The results of these paintability tests are presented in Table I. Blends of various of the improved resins with PBT, modifier resin and stabilizers are presented.

All compositions were prepared by melt blending the thermoplastic copolyether ester elastomer with the thermoplastic polyester in a Werner Pfliederer twin-screw extruder.

### RESINS

Resin 1, a control resin not forming a part of the blends of this invention, is a copolyether ester prepared from butane diol, hexane diol, dimethyl terephthalate and polytetramethylene glycol and commercially available as Lomod® XB006 resin from the General Electric Company. The flexural modulus is 41400kPa (6,000 psi) and the commercial form includes a stabilizer package similar to that described herein.

Resin 2 is a copolyether ester prepared from butane diol, hexane diol, dimethyl terephthalate, polytetramethylene glycol and, in accordance with the invention, includes 15 mol % of polyethylene glycol (mw 2,000) based on the total PTMEG/PEG content.

Resins 3 and 4 are similar to Resin 2 but contain 25 mol % and 35 mol %, respectively, of polyethylene glycol as above.

"PBT" is a polybutylene terephthalate commercially available as Valox® 295 from the General Electric Company.

"ABS" is a core-shell polymer with polybutadiene core and a styrene-acrylonitrile copolymer shell commercially available as Blendex® 338 from the General Electric Company.

"Epoxy" is a commercially available 3,4-epoxycyclohexyl carboxylate multi-functional epoxy stabilizer.

"Phenol," a hindered phenol stabilizer, is a commercially available tetrakis(methylene 3-(3,5-ditertbutyl-4-hydroxyphenyl) propionate)methane.

"Phosphite" stabilizer is a commercially available tris(nonylphenyl)phosphite.

"Thioester" stabilizer is a commercially available pentaerythritol octylthio propionate.

**TABLE I**

| Resin | Parts by Weight | | | |
|---|---|---|---|---|
| 1 | 40.2 | | | |
| 2 | | | | 35.0 |
| 3 | | 40.2 | | |
| 4 | | | 40.2 | |
| PBT | 49.0 | 49.0 | 49.0 | 49.2 |
| ABS | 10.0 | 10.0 | 10.0 | 15.0 |
| EPOXY | 0.3 | 0.3 | 0.3 | 0.3 |
| PHENOL | 0.2 | 0.2 | 0.2 | 0.2 |
| PHOSPHITE | 0.15 | 0.15 | 0.15 | 0.15 |
| THIOESTER | 0.15 | 0.15 | 0.15 | 0.15 |
| Flexural Modulus, (kpsi) MPa | (55) 380 | (49) 338 | (57) 393 | (75) 518 |
| Flexural Strength, (psi) KPa | (2760) 19044 | (2640) 18216 | (2600) 17940 | (3270) 22563 |
| Tensile Elongation, % | 426 | 435 | 318 | 294 |
| Tensile Strength, (psi) KPa at yield | (2260) 17940 | (2240) 15456 | (2200) 15180 | (2410) 16629 |
| Paint Adhesion, T-test | 2.3 | 3.5 | | |
| Paint Adhesion, X-hatch | FAIL | PASS | | |

Although the present invention has been described in connection with certain preferred embodiments and specific examples, it is not so limited. Variations within the scope of the appended claims will be apparent to the artisan.

## Claims

1. A thermoplastic molding composition comprising an admixture of
(I) a copolyether ester composition comprising the reaction product of
(a) at least one low molecular weight aliphaltic, cycloatiphalic or aromatic diol;
(b) at least one dicarboxylic acid;
(c) at least one poly(alkylene oxide)glycol consisting predominantly of alkylene oxide units having a carbon-to-oxygen ratio of greater than 2.0 and
(d) polyethylene glycol; and
(II) one or more aromatic polyesters, wherein said polyesters consist essentially of repeating units of the general formula 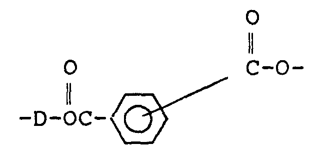
wherein D is derived from a C₂ to C₆ aliphatic diol.

2. The composition of claim 1 wherein the low molecular weight diol component (a) comprises butanediol.

3. The composition of claim 1 or 2 wherein the low molecular weight diol component (a) comprises hexanediol.

4. The composition of claim 1 wherein the poly(alkylene oxide) glycol component (c) comprises polytetramethylene glycol.

5. The composition of claim 4 wherein the polytetramethylene glycol is of an average molecular weight of between about 600 and about 4,000.

6. The composition of claim 1 wherein the dicarboxylic acid component (b) is selected from the group consisting of C₂ to C₁₉ aliphatic, cycloaliphatic and/or aromatic dicarboxylic acids, the ester equivalents thereof and mixtures thereof.

7. The composition of claim 6 wherein at least 60 mol % of the dicarboxylic acids or their esters are the same.

8. The composition of claim 6 wherein at least 80 mol % of the dicarboxylic acids or their esters are the same.

9. The composition of any preceding claim wherein the predominant dicarboxylic acid is dimethyl terephthalate.

10. The composition of any preceding claim wherein the polyethylene glycol component (d) has an average molecular weight of about 200 to about 4,000.

11. The composition of claim 1 wherein the copolyether ester component (I) comprises the reaction product of
(a) terephthalic acid or ester,
(b) butanediol,
(c) polytetramethylene glycol and
(d) polyethylene glycol.

12. The composition of claim 11 wherein the terephthalic acid is dimethyl terephthalate acid or an ester thereof.

13. The composition of claim 1 further comprising a stabilizer (IV).

14. The composition of claim 13 wherein the stabilizer comprises a combination of a primary and a secondary antioxidant.

15. The composition of claim 13 wherein the stabilizer component comprises a hindered phenol or amine antioxidant.

16. The composition of claim 1 wherein the poly(alkylene oxide) component (c) comprises polypropylene glycol.

17. The composition of claim 1 wherein the copolyether ester component (I) comprises short chain units which are reaction products of (a) and (b), and long chain units which are reaction products of (b) and (c) or (b) and (d), wherein the weight ratio of short chain units to long chain units is from about 1:99 to about 99:1.

18. The composition of claim 17 wherein the weight ratio of short chain units to long chain units is about 20:80 to about 80:20.

19. The composition of claim 17 wherein the weight ratio is about 65:35 to about 30:70.

20. The composition of claim 1 wherein the low molecular weight diol component (a) consists of a mixture of butanediol and hexanediol.

21. The composition of claim 20 wherein the molar ratio of butanediol to hexanediol is from about 99:1 to about 50:50.

22. The composition of claim 1 comprising a poly(alkylene oxide) glycol consisting predominantly of propylene oxide units.

23. The composition of claim 1 comprising a poly(alkylene oxide) glycol consisting predominantly of tetramethylene oxide units.

24. The composition of claim 1 wherein the thermoplastic polyester component (II) comprises polybutylene terephthalate.

25. The composition of claim 1 further comprising (III) an olefinic rubber modifier component.

26. The composition of claim 1 further comprising (III) one or more homopolymer or copolymer modifier resins having as a major constituent units derived from one or more monomers selected from the group consisting of vinyl aromatics, esters of acrylic and alkyl acrylic acids and conjugated dienes.

27. The composition of claim 26 wherein the modifier resin component (III) comprises an ABS resin.

28. The composition of claim 26 wherein the modifier resin component (III) comprises an MBS resin.

29. The composition of claim 1 wherein the weight ratio of I:II is from about 20:80 to about 8:2.

30. The composition of claim 27 or 28 comprising from about 1 to about 50 percent by weight of modifier (III) based on the total weight of components (I), (II) and (III).

31. The composition of claim 1 further comprising (V) a filler.

32. The composition of claim 31 comprising up to about 50% by weight of filler, based on the total weight of the components (I), (II), (III) and (IV).

33. The composition of claim 1 wherein the polyester component (II) comprises a reaction product of an aliphatic or cycloaliphatic diol and an aromatic dicarboxylic acid.

34. The composition of claim 33 wherein the diol is butylene glycol.

35. The composition of claim 33 wherein the dicarboxylic acid is a phthalic acid.

36. The composition of claim 1 wherein component (II) is selected from the group consisting of poly(butylene terephthalate), poly(butylene terephthalate-co-isophthalate), poly(ethylene terephthalate) and blends thereof.

## Patentansprüche

1. Thermoplastische Formmasse, umfassend eine Mischung von
(I) einer Copolyetherester-Zusammensetzung, umfassend das Reaktionsprodukt von
(a) mindestens einem aliphatischen, cycloaliphatischen oder aromatischen Diol geringen Molekulargewichtes,
(b) mindestens einer Dicarbonsäure,
(c) mindestens einem Poly(alkylenoxid)glykol, das hauptsächlich aus Alkylenoxid-Einheiten besteht, die ein Kohlenstoff- zu Sauerstoff-Verhältnis von mehr als 2,0 aufweisen und
(d) Polyethylenglykol, und
(II) einem oder mehreren aromatischen Polyestern, wobei die genannten Polyester im Wesentlichen aus wiederkehrenden Einheiten der allgemeinen Formel bestehen 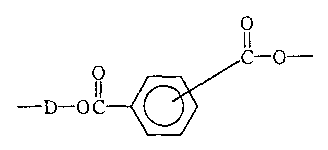
worin D von einem aliphatischen C₂-C₆-Diol stammt.

2. Masse nach Anspruch 1, worin die Diol-Komponente (a) geringen Molekulargewichtes Butandiol umfasst.

3. Masse nach Anspruch 1 oder 2, worin die Diol-Komponente (a) geringen Molekulargewichtes Hexandiol umfasst.

4. Masse nach Anspruch 1, worin die Poly(alkylenoxid)glykol-Komponente (c) Polytetramethylenglykol umfasst.

5. Masse nach Anspruch 4, worin das Polytetramethylenglykol ein mittleres Molekulargewicht von etwa 600 bis etwa 4.000 aufweist.

6. Masse nach Anspruch 1, worin die Dicarbonsäure-Komponente (b) ausgewählt ist aus der Gruppe bestehend aus aliphatischen, cycloaliphatischen und/oder aromatischen C₂-C₁₉-Dicarbonsäuren, den Ester-Äquivalenten davon und deren Mischungen.

7. Masse nach Anspruch 6, worin mindestens 60 Mol-% der Dicarbonsäuren oder ihrer Ester die Gleichen sind.

8. Masse nach Anspruch 6, worin mindestens 80 Mol-% der Dicarbonsäuren oder ihrer Ester die Gleichen sind.

9. Masse nach einem vorhergehenden Anspruch, worin die vorherrschende Dicarbonsäure Dimethylterephthalat ist.

10. Masse nach einem vorhergehenden Anspruch, worin die Polyethylenglykol-Komponente (d) ein mittleres Molekulargewicht von etwa 200 bis etwa 4.000 aufweist.

11. Masse nach Anspruch 1, worin die Copolyester-Komponente (I) das Reaktionsprodukt von
(a) Terephthalsäure oder -ester,
(b) Butandiol,
(c) Polytetramethylenglykol und
(d) Polyethylenglykol umfasst.

12. Masse nach Anspruch 11, worin die Terephthalsäure Dimethylterephthalsäure oder ein Ester davon ist.

13. Masse nach Anspruch 1, weiter umfassend einen Stabilisator (IV).

14. Masse nach Anspruch 13, worin der Stabilisator eine Kombination eines primären und eines sekundären Antioxidationsmittels umfasst.

15. Masse nach Anspruch 13, worin die Stabilisator-Komponente ein gehindertes Phenol- oder Amin-Antioxidationsmittel umfasst.

16. Masse nach Anspruch 1, worin die Poly(alkylenoxid)-Komponente (c) Polypropylenglykol umfasst.

17. Masse nach Anspruch 1, worin die Copolyetherester-Komponente (I) kurzkettige Einheiten, die Reaktionsprodukte von (a) und (b) sind, sowie langkettige Einheiten umfasst, die Reaktionsprodukte von (b) und (c) oder (b) und (d) sind, wobei das Gewichtsverhältnis der kurzkettigen Einheiten zu den langkettigen Einheiten von etwa 1:99 bis etwa 99:1 beträgt.

18. Masse nach Anspruch 17, worin das Gewichtsverhältnis der kurzkettigen Einheiten zu den langkettigen Einheiten etwa 20:80 bis etwa 80:20 beträgt.

19. Masse nach Anspruch 17, worin das Gewichtsverhältnis etwa 65:35 bis etwa 30:70 beträgt.

20. Masse nach Anspruch 1, worin die Diol-Komponente (a) geringen Molekulargewichtes aus einer Mischung von Butandiol und Hexandiol besteht.

21. Masse nach Anspruch 20, worin das molare Verhältnis von Butandiol zu Hexandiol von etwa 99:1 bis etwa 50:50 beträgt.

22. Masse nach Anspruch 1, umfassend ein Poly(alkylenoxid)glykol, das vorwiegend aus Propylenoxid-Einheiten besteht.

23. Masse nach Anspruch 1, umfassend ein Poly(alkylenoxid)glykol, das vorwiegend aus Tetramethylenoxid-Einheiten besteht.

24. Masse nach Anspruch 1, worin die thermoplastische Polyester-Komponente (II) Polybutylenterephthalat umfasst.

25. Masse nach Anspruch 1, weiter umfassend (III) eine modifizierende olefinische Kautschuk-Komponente.

26. Masse nach Anspruch 1, weiter umfassend (III) eines oder mehrere Homopolymer- oder Copolymer-Modifizierharze, die als einen Hauptbestandteil Einheiten aufweisen, die von einem oder mehreren Monomeren stammen, ausgewählt aus der Gruppe bestehend aus aromatischen Vinylverbindungen, Estern von Acryl- und Alkylacrylsäure und konjugierten Dienen.

27. Masse nach Anspruch 26, worin die Modifizierharz-Komponente (III) ein ABS-Harz umfasst.

28. Masse nach Anspruch 26, worin die Modifizierharz-Komponente (III) ein MBS-Harz umfasst.

29. Masse nach Anspruch 1, worin das Gewichtsverhältnis von I:II von etwa 20:80 bis etwa 8:2 beträgt.

30. Masse nach Anspruch 27 oder 28, umfassend von etwa 1 bis etwa 50 Gew.-% des Modifiziermittels (III), bezogen auf das Gesamtgewicht der Komponenten (I), (II) und (III).

31. Masse nach Anspruch 1, weiter umfassend (V) einen Füllstoff.

32. Masse nach Anspruch 31, umfassend bis zu etwa 50 Gew.-% Füllstoff, bezogen auf das Gesamtgewicht der Komponenten (I), (II), (III) und (IV).

33. Masse nach Anspruch 1, worin die Polyester-Komponente (II) ein Reaktionsprodukt eines aliphatischen oder cycloaliphatischen Diols und einer aromatischen Dicarbonsäure umfasst.

34. Masse nach Anspruch 33, worin das Diol Butylenglykol ist.

35. Masse nach Anspruch 33, worin die Dicarbonsäure eione Phthalsäure ist.

36. Masse nach Anspruch 1, worin Komponente (II) ausgewählt ist aus der Gruppe bestehend aus Poly(butylenterephthalat), Poly(butylenterephthalat-co-isophthalat), Poly(ethylenterephthalat) und deren Mischungen.

## Revendications

1. Composition thermoplastique pour moulage, comprenant un mélange de :
(I) une composition à base de copolyétherester, qui comprend le produit de réaction de
(a) au moins un diol aliphatique, cycloaliphatique ou aromatique, de faible masse moléculaire,
(b) au moins un acide dicarboxylique,
(c) au moins un poly(oxyde d'alkylène)glycol constitué essentiellement de motifs d'oxyde d'alkylène ayant un rapport du carbone à l'oxygène supérieur à 2,0, et
(d) un polyéthylèneglycol, et
(II) un ou plusieurs polyesters aromatiques, constitués essentiellement de motifs de formule générale : 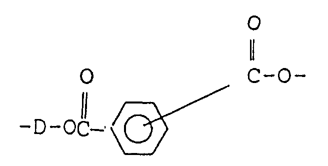
dans laquelle D dérive d'un diol aliphatique en C₂ à C₆.

2. Composition selon la revendication 1, pour laquelle le constituant diol de faible masse moléculaire (a) comprend du butanediol.

3. Composition selon la revendication 1 ou 2, pour laquelle le constituant diol de faible masse moléculaire (a) comprend de l'hexanediol.

4. Composition selon la revendication 1, pour laquelle le constituant poly(oxyde d'alkylène)glycol (c) comprend du polytétraméthylèneglycol.

5. Composition selon la revendication 4, pour laquelle le polytétraméthylèneglycol est un polytétraméthylèneglycol ayant une masse moléculaire moyenne comprise entre environ environ 600 et environ 4 000.

6. Composition selon la revendication 1, pour laquelle le constituant acide dicarboxylique (b) est choisi parmi les acides dicarboxyliques aliphatiques, cycloaliphatiques et/ou aromatiques, en C₂ à C₁₉, les équivalents esters de ces acides et les mélanges de ces produits.

7. Composition selon la revendication 6, pour laquelle au moins 60 % en moles des acides dicarboxyliques ou de leurs esters sont un même composé.

8. Composition selon la revendication 6, pour laquelle au moins 80 % en moles des acides dicarboxyliques ou de leurs esters sont un même composé.

9. Composition selon l'une quelconque des revendications précédentes, pour laquelle l'acide dicarboxylique prédominant est le téréphtalate de diméthyle.

10. Composition selon l'une quelconque des revendications précédentes, pour laquelle le constituant polyéthylèneglycol (d) a une masse moléculaire moyenne d'environ 200 à environ 4 000.

11. Composition selon la revendication 1, pour laquelle le constituant copolyétherester (I) comprend le produit de réaction de
(a) l'acide téréphtalique ou un ester de l'acide téréphtalique,
(b) le butanediol,
(c) un polytétraméthylèneglycol et
(d) un polyéthylèneglycol.

12. Composition selon la revendication 11, pour laquelle l'acide téréphthalique ou son ester est le téréphtalate de diméthyle.

13. Composition selon la revendication 1, qui comprend en outre un stabilisant (IV).

14. Composition selon la revendication 13, pour laquelle le stabilisant comprend une combinaison d'un antioxydant primaire et d'un antioxydant secondaire.

15. Composition selon la revendication 13, pour laquelle le stabilisant comprend un antioxydant du type phénol ou amine à empêchement stérique.

16. Composition selon la revendication 1, pour laquelle le constituant poly(oxyde d'alkylène)glycol (c) comprend du polypropylèneglycol.

17. Composition selon la revendication 1, pour laquelle le constituant copolyétherester (I) comprend des motifs à chaîne courte qui sont le produit de réaction de (a) et (b), et des motifs à chaîne longue qui sont le produit de réaction de (b) et (c) ou de (b) et (d), le rapport pondéral des motifs à chaîne courte aux motifs à chaîne longue allant d'environ 1:99 à environ 99:1.

18. Composition selon la revendication 17, pour laquelle le rapport pondéral des motifs à chaîne courte aux motifs à chaîne longue est d'environ 20:80 à environ 80:20.

19. Composition selon la revendication 17, pour laquelle le rapport pondéral est d'environ 65:35 à environ 30:70.

20. Composition selon la revendication 1, pour laquelle le constituant diol de faible masse moléculaire (a) est constitué d'un mélange de butanediol et d'hexanediol.

21. Composition selon la revendication 20, pour laquelle le rapport molaire du butanediol à l'hexanediol est d'environ 99:1 à environ 50:50.

22. Composition selon la revendication 1, comprenant un poly(oxyde d'alkylène)glycol constitué essentiellement de motifs oxyde de propylène.

23. Composition selon la revendication 1, comprenant un poly(oxyde d'alkylène)glycol constitué essentiellement de motifs oxyde de tétraméthylène.

24. Composition selon la revendication 1, dont le constituant polyester thermoplastique (II) comprend du poly(téréphtalate de butylène).

25. Composition selon la revendication 1, qui comprend en outre (III) un constituant modificateur du type caoutchouc oléfinique.

26. Composition selon la revendication 1, qui comprend en outre (III) une ou plusieurs résines modificatrices, homopolymères ou copolymères, ayant comme constituant majeur des motifs issus d'un ou plusieurs monomères choisis parmi les composés aromatiques vinyliques, les esters des acides acryliques et alkylacryliques et les diènes conjugués.

27. Composition selon la revendication 26, dont le constituant résine modificatrice (III) comprend une résine ABS.

28. Composition selon la revendication 26, dont le constituant résine modificatrice (III) comprend une résine MBS.

29. Composition selon la revendication 1, dans laquelle le rapport pondéral de I à II est d'environ 20:80 à environ 8:2.

30. Composition selon la revendication 27 ou 28, qui contient d'environ 1 à environ 50 % en poids de modificateur (III) par rapport au poids total des constituants (I), (II) et (III).

31. Composition selon la revendication 1, qui comprend en outre (V) une charge.

32. Composition selon la revendication 31, qui comprend jusqu'à environ 50 % en poids de charge par rapport au poids total des constituants (I), (II), (III) et (IV).

33. Composition selon la revendication 1, dont le constituant polyester (II) comprend le produit de réaction d'un diol aliphatique ou cycloaliphatique et d'un acide dicarboxylique aromatique.

34. Composition selon la revendication 33, pour laquelle le diol est le butylèneglycol.

35. Composition selon la revendication 33, pour laquelle l'acide dicarboxylique est un acide phtalique.

36. Composition selon la revendication 1, dont le constituant (II) est choisi parmi les poly(téréphtalate de butylène), les poly(téréphtalate-co-isophtalate de butylène), les poly(téréphtalate d'éthylène) et leurs mélanges.
